# EUROPÄISCHE PATENTSCHRIFT

(11) **EP 2 363 263 B1**
(45) Veröffentlichungstag und Bekanntmachung des Hinweises auf die Patenterteilung: **07.06.2017**
(21) Anmeldenummer: 10155698.3
(22) Anmeldetag: 05.03.2010
(51) Int. Cl.: B29C 33/30, F16C 29/04, F16C 33/38, B29C 45/26, B22D 17/22

(54) **Zentriereinrichtung für ein Formwerkzeug**
Centring device for a forming tool
Dispositif de centrage pour un outil de formage

(43) Veröffentlichungstag der Anmeldung: 07.09.2011
(73) Patentinhaber: Agathon AG Maschinenfabrik, 4503 Solothurn (CH)
(72) Erfinder: Nobs, Stefan, 3054 Schüpfen (CH); Dr. Pfluger, Walter H., 4515 Oberdorf (CH)
(74) Vertreter: BOVARD AG

(56) Entgegenhaltungen:
- JP-A- 2001 121 226
- JP-A- 2001 353 727
- JP-A- 2001 353 728
- JP-U- 56 012 522
- US-A- 2 422 775
- US-A- 2 846 278
- US-A- 4 664 534
- US-A1- 2004 043 103
- US-A1- 2009 220 631

## Beschreibung

Die vorliegende Erfindung bezieht sich auf eine Zentriereinrichtung für ein Formwerkzeug, insbesondere Spritzgiess- oder Druckgiesswerkzeug, gemäß dem Oberbegriff des Anspruchs 1 umfassend eine erste Formhälfte und eine zweite Formhälfte, welche durch Führungsmittel geführt von einer geschlossenen Position, bei welcher die jeweiligen Trennflächen der beiden Formhälften aneinander gepresst sind, in eine geöffnete Position verfahrbar sind und umgekehrt, welche Zentriereinrichtung aus mehreren an der ersten Formhälfte angebrachten vorstehenden Führungskörpern und an der zweiten Formhälfte angebrachten Führungsvertiefungen gebildet sind, durch welche die beiden Formhälften in der geschlossenen Position genau zentriert sind.

Derartige Formwerkzeuge sind in vielfältiger Weise bekannt. Diese können aus einer ersten Formhälfte und einer zweiten Formhälfte bestehen, welche beiden Formhälften je nach Komplexität des Formwerkzeugs mit mehreren Platten versehen sind, die geführt durch Säulenführungen von einer geschlossenen Position in eine geöffnete Position und umgekehrt verfahren werden können. In den Trennflächen der beiden Formhälften kann die Form angebracht werden, welche Form im geschlossenen Zustand des Formwerkzeugs mit einem Gusswerkstoff, der beispielsweise in die Form eingepresst wird, ausgefüllt wird. Nach dem Öffnen des Formwerkzeugs kann der sogenannte Formling aus dem Formwerkzeug entnommen werden, wobei beispielsweise Ausstosselemente das Ausformen aus dem Formwerkzeug erleichtern.

Um einen genauen Formling erhalten zu können, ist es erforderlich, dass die beiden Formhälften, welche die Form bilden, exakt ausgerichtet sind, was oftmals durch die Säulenführungen, in welchen die Formhälften geführt sind, nicht im gewünschten Masse gewährleistet werden kann. Deshalb wird in das Formwerkzeug eine Zentriereinrichtung eingesetzt, welche eine exakte Ausrichtung der einen Formhälfte zur andern Formhälfte gewährleistet.

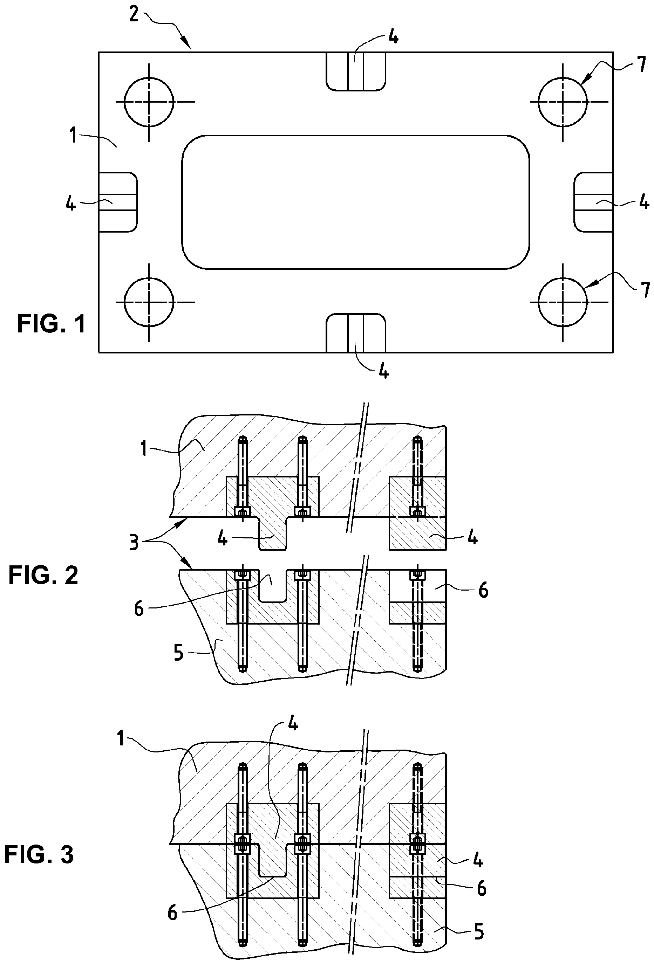

Eine bekannte Zentriereinrichtung ist in den Fig. 1 bis 3 der beigefügten Zeichnung dargestellt. In einer ersten Formhälfte 1 eines Formwerkzeugs 2 sind im Bereich der Trennfläche 3 vorstehende Führungskörper 4 befestigt, welche die Form von Quadern aufweisen. An der zweiten Formhälfte 5 sind Führungsvertiefungen 6 vorgesehen, welche die Form von Schlitzen aufweisen, und welche mit den Führungskörpern 4 der ersten Formhälfte korrespondieren. Im geschlossenen Zustand des Formwerkzeuges 2, wie dies aus Fig. 3 ersichtlich ist, befinden sich die Führungskörper 4 in den Führungsvertiefungen 6. Durch die genaue Anordnung der Führungskörper 4 und der Führungsvertiefungen 6 kann eine optimale Ausrichtung der ersten Formhälfte 1 zur zweiten Formhälfte 5 erreicht werden. Durch die Ausgestaltung der Führungskörper 4 und der Führungsvertiefungen 6 müssen diese jeweils mindestens paarweise und zweifach eingesetzt werden, um ein Zentrieren in alle Richtungen erreichen zu können, wobei die jeweils ein Paar bildenden Führungskörper 4 bzw. Führungsvertiefungen 6 einander im Wesentlichen gegenüberliegend angeordnet sein müssen, was, je nach Werkzeugaufbau, zu Platzproblemen führen kann. Aus Fig. 1 sind noch die Führungsmittel 7 ersichtlich, durch welche die erste Formhälfte 1 bezüglich der zweiten Formhälfte 5 geführt von einer geöffneten Position, wie sie beispielsweise in Fig. 2 dargestellt ist, in eine geschlossene Position, dargestellt in Fig. 3, verfahren werden kann. Derartige Zentriereinrichtungen werden beispielsweise durch die Firma Meusburger Georg GmbH & Co KG, A-6960 Wolfurt, Österreich, unter der Bezeichnung "Endzentrierung flach" auf dem Markt angeboten.

Mit dieser vorgängig beschriebenen Einrichtung wird eine genaue Zentrierung eines Formwerkzeugs in geschlossenem Zustand erhalten, die auf die Führungskörper und die Führungsvertiefungen wirkenden Flächenpressungen können sehr hoch werden, zudem müssen die entsprechenden Führungsflächen gleitend gegeneinander bewegt werden, was einen relativ hohen Verschleiss zur Folge hat, was wiederum dazu führt, dass diese Zentriereinrichtungen nach einer gewissen Zeit ausgetauscht werden müssen, was aufwendig und teuer ist.

Aus der Veröffentlichung JP 2001 121226 A ist eine Zentriereinrichtung entnehmbar, bei welcher zwischen Führungsbolzen und Führungshülse ein mit Kugeln versehener Kugelkäfig eingesetzt ist. Beim Zusammenführen der Zentriereinrichtung nach vollständiger Trennung muss eine Kugelreihe die auftretenden Zentrier- und Vorspannkräfte vollständig aufnehmen.

Die Aufgabe der vorliegenden Erfindung besteht somit darin, eine Zentriereinrichtung zu schaffen, welche die gewünschte Zentriergenauigkeit gewährleistet, deren Verschleiss möglichst gering gehalten werden kann, so dass diese Zentriereinrichtungen eine lange Lebensdauer haben und die Austauschzyklen verringert werden können.

Erfindungsgemäss erfolgt die Lösung dieser Aufgabe, gemäß dem kennzeichnenden Teil des Anspruchs 1 dadurch, dass jeder vorstehende Führungskörper aus einem kreiszylindrischen Bolzen gebildet ist, auf welchen ein Wälzkörperkäfig mit in Reihen eingesetzten Wälzkörpern aufgesetzt ist, der über Positioniermittel im geöffneten Zustand derart positioniert ist, dass eine gegen die erste Formhälfte gerichtete erste Wälzkörperreihe auf der kreiszylindrischen Fläche des Bolzens aufliegt und die zweite Wälzkörperreihe an einer die kreiszylindrische Fläche des Bolzens abschliessende umlaufende Kante anliegt, und dass jede Führungsvertiefung durch eine kreiszylindrische Innenfläche einer Hülse gebildet ist, die beim Schliessen des Formwerkzeugs auf die Wälzkörper des Wälzkörperkäfigs auffährt, derart, dass die Hülse praktisch gleichzeitig auf die erste Wälzkörperreihe und auf die zweite Wälzkörperreihe aufläuft und die Zentrier- und Vorspannkräfte gleichzeitig durch die erste Wälzkörperreihe und die zweite Wälzkörperreihe aufnehmbar sind.

Indem beim Schliessen des Formwerkzeugs die Hülse praktisch gleichzeitig auf die erste Wälzkörperreihe und auf die zweite Wälzkörperreihe aufläuft, so dass die wirkenden Zentrier- und Vorspannkräfte gleichzeitig durch zwei Wälzkörperreihen aufgenommen werden können, kann die Belastung der Wälzkörper und der diese abstützenden Flächen entsprechend aufgeteilt werden, was zur Erhöhung der Lebensdauer dieser Zentriereinrichtung dient.

Je nach geometrischer Ausgestaltung der Zentriereinrichtung können im Wälzköperkäfig vor der ersten Wälzkörperreihe und/oder nach der zweiten Wälzkörperreihe weitere Wälzkörperreihen vorgesehen sein, was die Zentrierung verbessern kann.

In vorteilhafter Weise weist der Bolzen einen an die kreiszylindrische Fläche abschliessende Kante anschliessenden Bereich auf, der durch eine weitere kreiszylindrische Fläche gebildet ist, die einen kleineren Durchmesser als die kreiszylindrische Fläche aufweist. Dadurch kann die Position der Wälzkörper der zweiten Wälzkörperreihe in der geöffneten Position des Formwerkzeugs derart festgelegt werden, dass diese nicht zu stark aus dem Wälzkörperkäfig vorstehen können, wodurch der Wälzkörperkäfig nicht zu stark beansprucht wird, was sich wiederum auf die Lebensdauer auswirkt.

In vorteilhafter Weise ist der Übergang von der Kante zur weiteren kreiszylindrischen Fläche mit einer Rundung versehen, die an die Rundung der Wälzkörper angepasst ist. Dadurch wird das Auflaufen der Wälzkörper über die Kante verbessert.

Eine weitere vorteilhafte Ausgestaltung der Erfindung besteht darin, dass die Hülse eine gegen den Wälzkörperkäfig gerichtete, die kreiszylindrische Innenfläche abschliessende weitere Kante aufweist, an welche sich ein konischer Einfahrbereich anschliesst. Dadurch wird der Punkt des Erreichens der vollen Vorspannkraft auf die Wälzkörper genau definiert, wobei das Einfahren auf die Wälzkörper durch den konischen Einfahrbereich schonend erfolgt.

In vorteilhafter Weise ist der Bolzen mit einem Kopf versehen, welcher in einfacher Weise in die erste Formhälfte eingesetzt und befestigt werden kann.

Eine weitere vorteilhafte Ausgestaltung der Erfindung besteht darin, dass die Positioniermittel aus mindestens zwei Stiften gebildet sind, welche verteilt über den Umfang am Wälzkörperkäfig angebracht sind und parallel zur Achse des Bolzens ausgerichtet sind, und welche in im Kopf des Bolzens angebrachten Bohrungen geführt verschiebbar sind, was einen einfachen und kostengünstigen Aufbau ermöglicht.

In vorteilhafter Weise sind die Stifte an den dem Wälzkörperkäfig abgewandten Endbereich mit Köpfen versehen, die mit an den Bohrungen angeordneten Schultern Anschläge bilden, wodurch die ausgefahrene Position des Wälzkörperkäfigs in einfacher Weise bestimmt werden kann.

In vorteilhafter Weise sind in die Bohrungen Druckfedern eingesetzt, welche die Köpfe der Stifte gegen die Schultern drücken, wodurch erreicht wird, dass sich der Wälzkörperkäfig im geöffneten Zustand des Formwerkzeugs in der korrekten Position befindet.

In vorteilhafter Weise erfolgt die Verbindung zwischen den Stiften und dem Wälzkörperkäfig über einen Sprengring, welcher in eine den Wälzkörperkäfig umlaufende Nut eingelegt ist, und welcher in Schlitze hineinragt, die an den Stiften angebracht sind. Dadurch wird eine einfache und kostengünstig herstellbare Verbindung zwischen Wälzkörperkäfig und Stiften erreicht.

Eine weitere vorteilhafte Ausgestaltung der Erfindung besteht darin, dass die Wälzkörper Rollen oder Kugeln sind, was einen einfachen Aufbau des Wälzkörperkäfigs zur Folge hat, der kostengünstig hergestellt werden kann.

Eine Ausführungsform der Erfindung wird nachfolgend anhand der in der Zeichnung dargestellten Figuren 4 bis 13 beispielhaft näher erläutert, wobei
Fig. 4a bis 4d das Auffahren der Hülse auf den auf den Bolzen aufgesetzten, mit Wälzkörpern versehenen Wälzkörperkäfig beim Schliessen des Formwerkzeugs;
Fig. 5 im Schnitt eine vergrösserte Darstellung der Einfahrsituation der Hülse auf die Wälzkörper des Wälzkörperkäfigs;
Fig. 6, 7 und 9 im Schnitt die Einfahrphase der Hülse auf den auf den Bolzen aufgesetzten, mit Wälzkörpern versehenen Wälzkörperkäfig von der geöffneten Position in die geschlossene Position;
Fig. 8 eine vergrösserte Schnittdarstellung der Verbindung zwischen Stift und Wälzkörperkäfig;
Fig. 10 eine Schnittdarstellung der Zentriereinrichtung entlang Linie X-X gemäss Fig. 9;
Fig. 11 eine mögliche Anordnung der Zentriereinrichtung in einem Formwerkzeug;
Fig. 12 und 13 im Schnitt die Anordnung von Bolzen und Hülse in der jeweiligen Formhälfte, im geöffneten und geschlossenen Zustand des Formwerkzeugs zeigen.

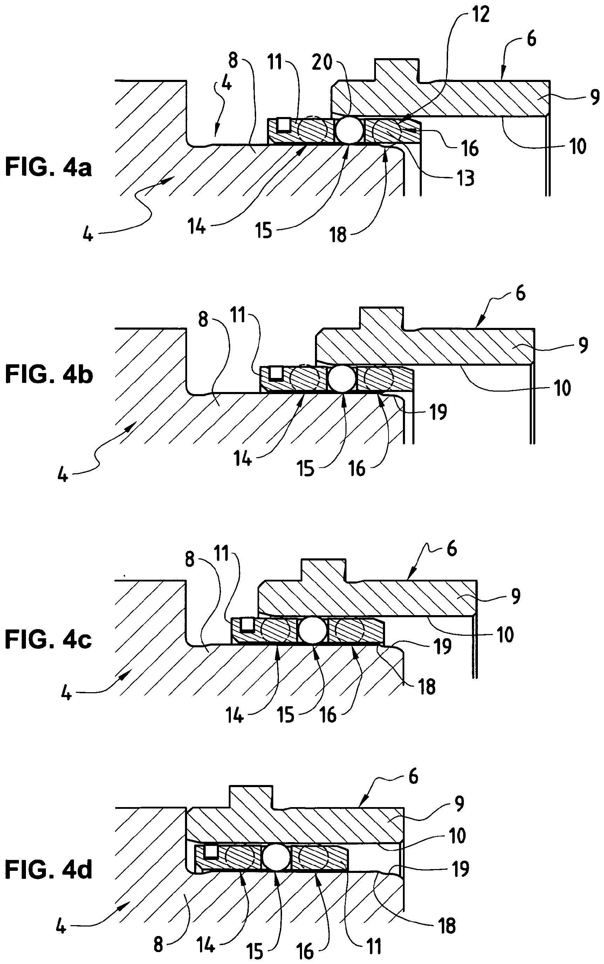

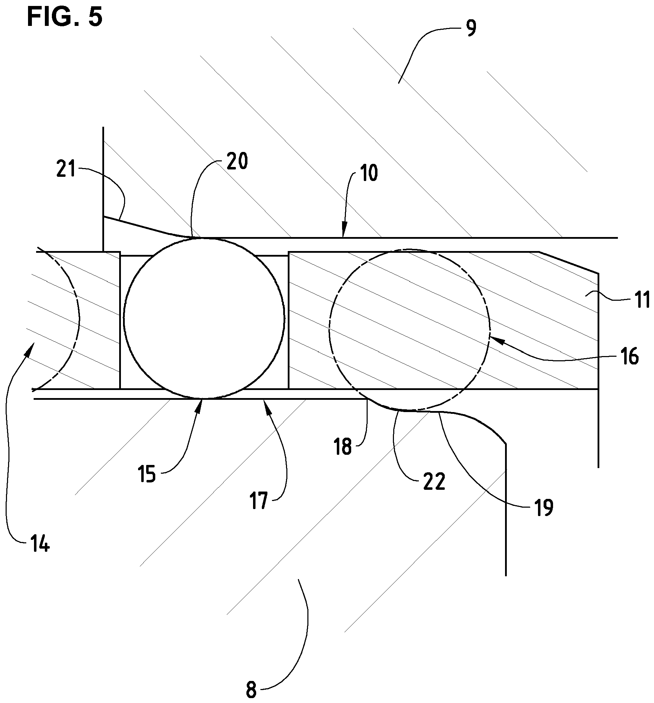

Aus den Fig. 4a bis 4d und Fig. 5 ist jeweils der vorstehende Führungskörper 4 ersichtlich, der als kreiszylinderförmiger Bolzen 8 ausgebildet ist. Wie später noch gesehen wird, ist dieser kreiszylinderförmige Bolzen 8 in der ersten Formhälfte eines Formwerkzeugs befestigt. Mit diesem Bolzen 8 wirkt die Führungsvertiefung 6 zusammen, die als in einer Hülse 9 angebrachten kreiszylindrischen Innenfläche 10 ausgebildet ist, die, wie ebenfalls später noch gesehen wird, in der zweiten Formhälfte eines Formwerkzeugs befestigt ist. Auf den Bolzen ist ein Wälzkörperkäfig 11 aufgesetzt, in welchen in bekannter Weise Wälzkörper 12 eingesetzt sind. Im vorliegenden Ausführungsbeispiel sind diese Wälzkörper 12 als Rollen 13 ausgebildet, die in bekannter Weise in Reihen 14, 15, 16 im Wälzkörperkäfig 11 angeordnet sind. Selbstverständlich könnten anstelle von Rollen auch Kugeln eingesetzt werden.

Bei voll geöffnetem Formwerkzeug ist die Hülse 9 ausserhalb des Einflussbereiches des Bolzens 8. In dieser voll geöffneten Position wird der Wälzkörperkäfig 11 über später noch im Detail beschriebene Positioniermittel in eine Position gebracht, wie sie aus Fig. 4a und insbesondere aus der vergrösserten Darstellung in Fig. 5 ersichtlich ist. In dieser Position des Wälzkörperkäfigs 11 befindet sich eine erste Wälzkörperreihe 15 auf der kreiszylindrischen Fläche 17 des Bolzens 8. Eine zweite Wälzkörperreihe 16 liegt an einer den Bolzen 8 umlaufenden Kante 18 an, durch welche die kreiszylindrische Fläche 17 des Bolzens abgeschlossen wird. Die Rollen der zweiten Reihe 16 liegen auf einer weiteren kreiszylindrischen Fläche 19 auf, die einen Bereich bildet, der an die die kreiszylindrische Fläche 17 abschliessende Kante 18 anschliesst. Diese weitere kreiszylindrische Fläche 19 hat einen um etwa 0,5 mm kleineren Durchmesser als die kreiszylindrische Fläche 17 des Bolzens 8, welcher einen Durchmesser von etwa 30 mm hat.

Wenn nun das Formwerkzeug geschlossen wird, fährt die Hülse 9 auf den Wälzkörperkäfig 11 auf. Wie aus Fig. 4a und insbesondere aus Fig. 5 ersichtlich ist, überfährt die Hülse 9 die zweite Reihe 16 der im Wälzkörperkäfig 11 angeordneten Rollen 13, da sich diese Rollen 13 der zweiten Reihe 16 im Bereich der weiteren kreiszylindrischen Flächen 19 befinden und sich somit gegenüber der Hülse 9 in einer zurückgezogenen Position befinden. Beim weiteren Vorfahren der Hülse 9 gelangt die weitere Kante 20 der Hülse 9, die die kreiszylindrische Innenfläche 10 der Hülse 9 abschliesst, in Kontakt mit der ersten Reihe 15 der im Wälzkörperkäfig 11 angeordneten Rollen 13. Um das Auffahren der Hülse 9 auf die Rollen 13 der ersten Reihe 15 zu erleichtern, weist die Hülse 9 einen vor der Kante 18 liegenden konischen Einfahrbereich 21 auf.

Sobald die weitere Kante 20 die Rollen 13 der ersten Reihe 15 überfährt, beginnen sich diese Rollen 13 der ersten Reihe 15 zu drehen, der Wälzkörperkäfig 11 wird auf den Bolzen aufgeschoben und versetzt die Rollen 13 der zweiten Reihe 16 in Bewegung. Diese überfahren die Kante 18 und gelangen zwischen die kreiszylindrische Fläche 17 des Bolzens 8 und der kreiszylindrischen Innenfläche 10 der Hülse 9 und gelangen sofort unter Vorspannung, entsprechend den Rollen 13 der ersten Reihe 15, wie dies aus Fig. 4b ersichtlich ist. Der Übergang von der Kante 18 zur weiteren kreiszylindrischen Fläche 19 ist hierzu mit einer Rundung 22 versehen, die an die Rundung der Rollen 13 angepasst ist, wie insbesondere aus Fig. 5 ersichtlich ist.

Mit dieser Anordnung gelangen die Rollen der ersten Reihe 15 und die Rollen der zweiten Reihe 16 praktisch gleichzeitig unter Vorspannung, wodurch die Belastungsspitzen reduziert werden können.

Beim weiteren Schliessvorgang des Formwerkzeuges überfährt die Hülse 9 die Rollen der weiteren Reihe 14, die im Wälzkörperkäfig 11 angeordnet ist, wie dies aus Fig. 4c ersichtlich ist, diese weitere Reihe nimmt somit zusätzlich einen Teil der Last auf.

Das Formwerkzeug wird in die vollständig geschlossene Position gebracht, die Hülse 9 ist dabei vollständig auf den Wälzkörperkäfig 11 und somit den Bolzen 8 aufgefahren, wie dies aus Fig. 4d ersichtlich ist, die Zentrierkräfte werden durch die im Wälzkörperkäfig 11 angeordneten Rollen 13 übertragen.

Beim Öffnen des Formwerkzeugs verläuft der oben beschriebene Vorgang umgekehrt, nach dem Ausfahren der Hülse 9 aus dem Wälzkörperkäfig 11 wird dieser entsprechend neu positioniert, so dass der nächste Zentriervorgang beim nächsten Schliessen des Formwerkzeugs in optimaler Weise erfolgen kann.

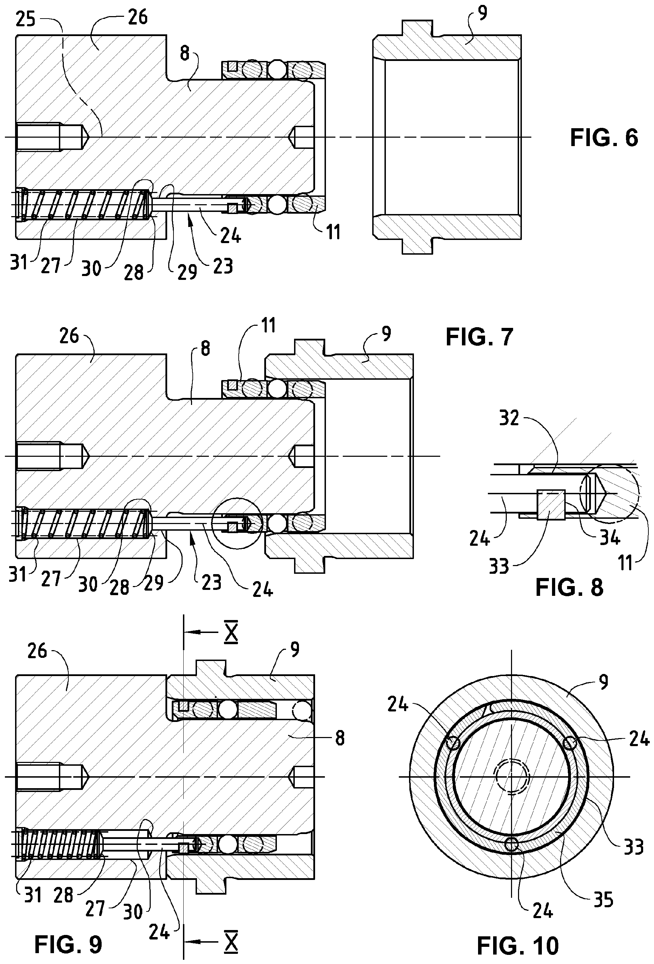

Aus den Fig. 6, 7 und 9 sind die Positioniermittel 23 ersichtlich, mit welchen der Wälzkörperkäfig 11 mit den darin enthaltenen Rollen 13 in die vorgängig beschriebene Position bei geöffnetem Formwerkzeug gebracht wird. Diese Positioniermittel 23 sind aus Stiften 24 gebildet, welche verteilt über den Umfang am Wälzkörperkäfig 11 angebracht und parallel zur Achse 25 des Bolzens 8 ausgerichtet sind. Der Bolzen 8 ist mit einem Kopf 26 ausgestattet. In diesem Kopf 26 sind Bohrungen 27 angebracht, welche ebenfalls parallel zur Achse 25 ausgerichtet sind. In diesen Bohrungen 27 sind die Stifte 24 verschiebbar geführt. Die dem Wälzkörperkäfig 11 abgewandten Endbereiche dieser Stifte 24 sind mit Köpfen versehen, die mit an den Bohrungen 27 angeordneten Schultern 29 Anschläge 30 bilden, welche die ausgefahrene Position des Wälzkörperkäfigs 11 bestimmen. In die Bohrungen 27 sind Druckfedern 31 eingesetzt, welche die Köpfe 28 der Stifte 24 gegen die Schultern 29 drücken und die dafür sorgen, dass der Wälzkörperkäfig 11 bei geöffnetem Formwerkzeug die richtige Position einnimmt.

Fig. 6 zeigt die Lage des Wälzkörperkäfigs 11 bei geöffnetem Formwerkzeug, wenn die Hülse 9 sich ausserhalb dem Einflussbereich des Wälzkörperkäfigs 11 befindet. Fig. 7 zeigt die Position der Hülse 9 während des Schliessens des Formwerkzeuges, Fig. 9 zeigt die voll geschlossene Position des Formwerkzeugs, die Stifte 24 sind hierbei entgegen der Kraft der Druckfeder 31 in die Bohrungen 27 eingefahren. Das Einfahren der Hülse 9 auf die Rollen 13 des Wälzkörperkäfigs 11 erfolgt gemäss dem vorgängig beschriebenen Ablauf.

Aus den Fig. 8 und 10 ist Verbindung zwischen den Stiften 24 und dem Wälzkörperkäfig 11 dargestellt. Im Wälzkörperkäfig 11 sind Bohrungen 32 angebracht, in welche die Stifte 24 eingesetzt sind, wie dies aus Fig. 8 ersichtlich ist. Der Wälzkörperkäfig 11 ist mit einer umlaufenden Nut 33 versehen, die Stifte 24 sind im Bereich der Nut 33 mit einem Schlitz 34 versehen. In die Nut 33 und die Schlitze 34 der Stifte 24 wird ein umlaufender Sprengring 35 eingesetzt, wie insbesondere aus Fig. 10 ersichtlich ist, wodurch die Stifte 24 im Wälzkörperkäfig 11 gehalten werden. Wie aus Fig. 10 ersichtlich ist, sind im vorliegenden Ausführungsbeispiel drei über den Umfang verteilte Stifte 24 angebracht, selbstverständlich könnte auch eine andere Anzahl Stifte 24 eingesetzt werden. Es ist ohne weiteres denkbar, dass zwei Stifte 24 eingesetzt werden,welche einander gegenüberliegend angeordnet sind. Zur zusätzlichen Führung des Wälzkörperkäfigs 11 können an der innenseitigen Oberfläche des Wälzkörperkäfigs 11 Gleitflächen angebracht werden, die ringförmig ausgestaltet sein können, und die nur einen geringfügig grösseren Innendurchmesser aufweisen, als der Aussendurchmesser des jeweiligen Bolzens 8. Dadurch wird ein Abkippen des Wälzkörperkäfigs 11 vermieden.

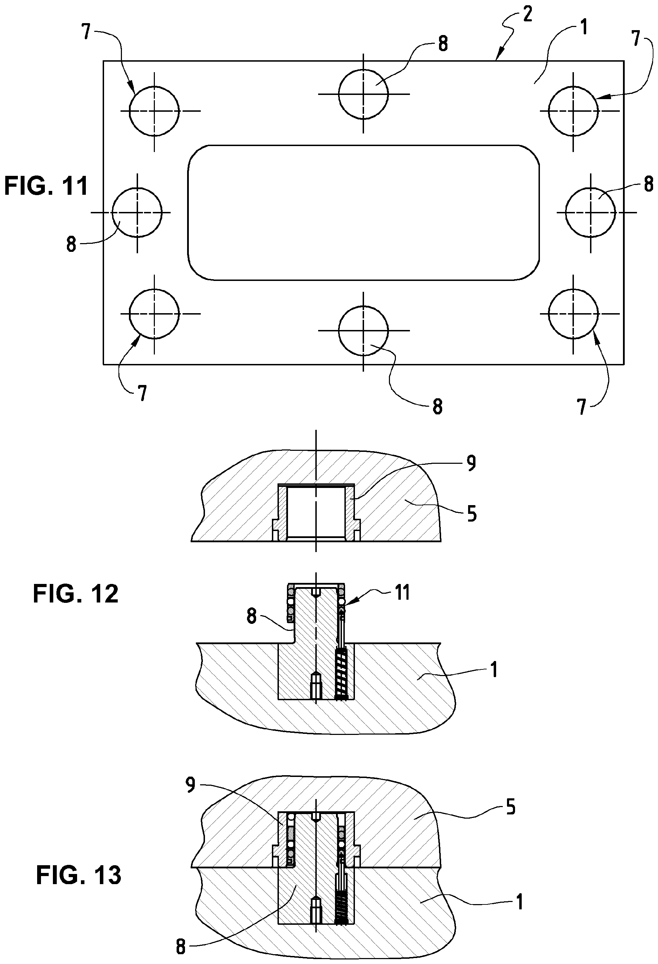

Fig. 11 zeigt eine Ansicht auf eine erste Formhälfte 1 eines Formwerkzeuges 2. Wie bereits zum Stand der Technik erwähnt worden ist, weist ein derartiges Formwerkzeug Führungsmittel 7 auf, die in bekannter Weise als Säulenführungen ausgebildet sind. In die erste Formhälfte 1 sind die Bolzen 8 eingesetzt, im hier dargestellten Ausführungsbeispiel sind in die erste Formhälfte vier derartige Bolzen 8 eingesetzt, um eine Zentrierung eines Formwerkzeugs zu erhalten, sind prinzipiell zwei Bolzen 8 erforderlich. Selbstverständlich kann eine beliebige Zahl von Zentrierelementen in ein Formwerkzeug eingesetzt werden, abhängig von der Grösse und der Ausgestaltung des Formwerkzeugs. Diese Zentrierelemente können an geeigneter Stelle, insbesondere dort, wo es die Platzverhältnisse problemlos zulassen, am Formwerkzeug angebracht werden.

Fig. 12 zeigt die Anordnung eines Bolzens 8 in der ersten Formhälfte 1 sowie die Anordnung einer Hülse 9 in der zweiten Formhälfte 5 eines Formwerkzeuges 2, welches sich in der geöffneten Position befindet. Fig. 13 zeigt eine entsprechende Anordnung bei geschlossenem Formwerkzeug 2.

Mit einer derartigen erfindungsgemässen Zentriereinrichtung für ein Formwerkzeug wird ein optimales und exaktes Zentrieren der beiden Formhälften erreicht, die auftretenden Kräfte werden in optimaler Weise von den entsprechenden Führungselementen aufgenommen, durch die Einsetzung von Wälzkörpern wird der Verschleiss sehr klein gehalten, die Lebensdauer einer derartigen Zentriereinrichtung wird verbessert.

## Patentansprüche

1. Zentriereinrichtung für ein Formwerkzeug (2), insbesondere Spritzgiess- oder Druckgiesswerkzeug, umfassend eine erste Formhälfte (1) und eine zweite Formhälfte (5), welche durch Führungsmittel (7) geführt von einer geschlossenen Position, bei welcher die jeweiligen Trennflächen (3) der beiden Formhälften (1, 5) aneinander gepresst sind, in eine geöffnete Position verfahrbar sind und umgekehrt, welche Zentriereinrichtung aus mehreren an der ersten Formhälfte (1) angebrachten vorstehenden Führungskörpern (4) und an der zweiten Formhälfte (5) angebrachten Führungsvertiefungen (6) gebildet sind, durch welche die beiden Formhälften (1, 5) in der geschlossenen Position genau zentriert sind, wobei jeder vorstehende Führungskörper (4) aus einem kreiszylindrischen Bolzen (8) gebildet ist, auf welchen ein Wälzkörperkäfig (11) mit in Reihen (14, 15, 16) eingesetzten Wälzkörpern (12) aufgesetzt ist, **dadurch gekennzeichnet, dass** der Wälzkörperkäfig (11) über Positioniermittel (23) im geöffneten Zustand derart positioniert ist, dass eine gegen die erste Formhälfte (1) gerichtete erste Wälzkörperreihe (15) auf der kreiszylindrischen Fläche (17) des Bolzens (8) aufliegt und die zweite Wälzkörperreihe (16) an einer die kreiszylindrische Fläche (17) des Bolzens (8) abschliessende umlaufende Kante (18) anliegt, und dass jede Führungsvertiefung (6) aus einer Hülse (9) mit einer kreiszylindrischen Innenfläche (10) gebildet ist, die beim Schliessen des Formwerkzeugs auf die Wälzkörper (12) des Wälzkörperkäfigs (11) auffahrbar ist, derart, dass die Hülse (9) praktisch gleichzeitig auf die erste Wälzkörperreihe (15) und auf die zweite Wälzkörperreihe (16) aufläuft und die Zentrier- und Vorspannkräfte gleichzeitig durch die erste Wälzkörperreihe (15) und die zweite Wälzkörperreihe (16) aufnehmbar sind.

2. Zentriereinrichtung für ein Formwerkzeug nach Anspruch 1, **dadurch gekennzeichnet, dass** vor der ersten Wälzkörperreihe (15) und/oder nach der zweiten Wälzkörperreihe (16) weitere Wälzkörperreihen (14) vorgesehen sind.

3. Zentriereinrichtung für ein Formwerkzeug nach Anspruch 1 oder 2, **dadurch gekennzeichnet, dass** der Bolzen (8) einen an die die kreiszylindrische Fläche (17) abschliessende Kante (18) anschliessenden Bereich aufweist, der durch eine weitere kreiszylindrische Fläche (19) gebildet ist, die einen kleineren Durchmesser als die kreiszylindrische Fläche (17) aufweist.

4. Zentriereinrichtung für ein Formwerkzeug nach Anspruch 3, **dadurch gekennzeichnet, dass** der Übergang von der Kante (18) zur weiteren kreiszylindrischen Fläche (19) mit einer Rundung (22) versehen ist, die an die Rundung der Wälzkörper (12) angepasst ist.

5. Zentriereinrichtung für ein Formwerkzeug nach einem der Ansprüche 1 bis 4, **dadurch gekennzeichnet, dass** die Hülse (9) eine gegen den Wälzkörperkäfig (11) gerichtete, die kreiszylindrische Innenfläche (10) abschliessende weitere Kante (20) aufweist, an welche sich ein konischer Einfahrbereich (21) anschliesst.

6. Zentriereinrichtung für ein Formwerkzeug nach einem der Ansprüche 1 bis 5, **dadurch gekennzeichnet, dass** der Bolzen (8) mit einem Kopf (26) versehen ist, welcher in die erste Formhälfte (1) eingesetzt und befestigt ist.

7. Zentriereinrichtung für ein Formwerkzeug nach Anspruch 6, **dadurch gekennzeichnet, dass** die Positioniermittel (23) aus mindestens zwei Stiften (24) gebildet sind, welche verteilt über den Umfang am Wälzkörperkäfig (11) angebracht sind und parallel zur Achse (25) des Bolzens (8) ausgerichtet sind, und welche in im Kopf (26) des Bolzens (8) angebrachten Bohrungen (27) geführt verschiebbar sind.

8. Zentriereinrichtung für ein Formwerkzeug nach Anspruch 7, **dadurch gekennzeichnet, dass** die Stifte (24) an den dem Wälzkörperkäfig (11) abgewandten Endbereich mit Köpfen (28) versehen sind, die mit an den Bohrungen (27) angeordneten Schultern (29) Anschläge (30) bilden, welche die ausgefahrene Position des Wälzkörperkäfigs (11) bestimmen.

9. Zentriereinrichtung für ein Formwerkzeug nach Anspruch 8, **dadurch gekennzeichnet, dass** in die Bohrungen (27) Druckfedern (31) eingesetzt sind, welche die Köpfe (28) der Stifte (24) gegen die Schultern (29) drücken.

10. Zentriereinrichtung für ein Formwerkzeug nach einem der Ansprüche 7 bis 9, **dadurch gekennzeichnet, dass** die Verbindung zwischen den Stiften (24) und dem Wälzkörperkäfig (11) über einen Sprengring (35) erfolgt, welcher in eine den Wälzkörperkäfig (11) umlaufende Nut (33) eingelegt ist, und welcher in Schlitze (34) hineinragt, die an den Stiften (24) angebracht sind.

11. Zentriereinrichtung für ein Formwerkzeug nach einem der Ansprüche 1 bis 10, **dadurch gekennzeichnet, dass** die Wälzkörper (12) Rollen (13) oder Kugeln sind.

## Claims

1. Centring device for a forming tool (2), in particular an injection-molding or die-casting tool, comprising a first mould half (1) and a second mould half (5), which are movable, guided by guiding means (7), from a closed position, in which the respective partition surfaces (3) of the two mould halves (1, 5) are pressed against one another, into an opened position and vice versa, which centring device are <sic. is> formed from a plurality of protruding guiding bodies (4) put on the first mould half (1) and guiding recesses (6) provided on the second mould half (5), by means of which the two mould halves (1, 5) are precisely centred in the closed position, each protruding guiding body (4) being formed from a circularly cylindrical bolt (8), on which a rolling body cage (11) is placed with rolling bodies (12) inserted in rows (14, 15, 16), **characterized in that** the rolling body cage (11) is positioned via positioning means (23) in the opened state in such a way that a first rolling body row (15) directed toward the first mould half (1) rests on the circularly cylindrical surface (17) of the bolt (8) and the second rolling body row (16) abuts an encircling edge (18) concluding the circularly cylindrical surface (17) of the bolt (8), and **in that** each guiding recess (6) is formed from a sleeve (9) with a circularly cylindrical inner surface (10), which, upon closing of the forming tool, is able to run into the rolling bodies (12) of the rolling body cage (11), in such a way that the sleeve (9) runs practically simultaneously on the first rolling body row (15) and on the second rolling body row (16) and the centring and pretensioning forces are able to be absorbed simultaneously by the first rolling body row (15) and the second rolling body row (16).

2. Centring device for a forming tool according to claim 1, **characterized in that** further rolling body rows (14) are provided in front of the first rolling body row (15) and/or after the second rolling body row (16).

3. Centring device for a forming tool according to claim 1 or 2, **characterized in that** the bolt (8) has a region adjacent to the edge (18) concluding the circularly cylindrical surface (17), which region is formed by a further circularly cylindrical surface (19), which has a smaller diameter than the circularly cylindrical surface (17).

4. Centring device for a forming tool according to claim 3, **characterized in that** the transition from the edge (18) to the further circularly cylindrical surface (19) is provided with a curvature (22), which is adapted to the curvature of the rolling bodies (12).

5. Centring device for a forming tool according to one of the claims 1 to 4, **characterized in that** the sleeve (9) has a further edge (20) directed toward the rolling body cage (11) and concluding the circularly cylindrical inner surface (10), to which a conical retraction area (21) connects.

6. Centring device for a forming tool according to one of the claims 1 bis 5, **characterized in that** the bolt (8) is provided with a head (26), which inserts into and is fixed in the first mould half (1).

7. Centring device for a forming tool according to claim 6, **characterized in that** the positioning means (23) are formed from at least two pins (24), which are introduced in a distributed way over the circumference of the rolling body cage (11) and are aligned parallel to the axis (25) of the bolt (8), and which are displaceable in a guided way in bores (27) made in the head (26) of the bolt (8).

8. Centring device for a forming tool according to claim 7, **characterized in that** the pins (24) are provided with heads (28) at the end region remote from the rolling body cage (11), which heads form stops (30) with shoulders (29) disposed on the bores (27), which stops determine the extended position of the rolling body cage (11).

9. Centring device for a forming tool according to claim 8, **characterized in that** pressure springs (31) are inserted into the bores (27), which springs press the heads (28) of the pins (24) against the shoulders (29).

10. Centring device for a forming tool according to one of the claims 7 to 9, **characterized in that** the connection between the pins (24) and the rolling body cage (11) takes place via a retaining ring (35), which is inserted into a groove (33) surrounding the rolling cage body (11), and which protrudes into slits (34), which are made on the pins (24).

11. Centring device for a forming tool according to one of the claims 1 to 10, **characterized in that** the rolling bodies (12) are rollers (13) or balls.

## Revendications

1. Dispositif de centrage pour outil de formage (2), en particulier un outil de moulage par injection ou de coulée sous pression, comprenant une première moitié de forme (1) et une deuxième moitié de forme (5), lesquelles peuvent être déplacées, en étant conduites par un moyen de guidage (7), depuis une position fermée, dans laquelle les surfaces de découpe respectives (3) des deux moitiés de forme (1,5) sont comprimées l'une contre l'autre, vers une position ouverte et inversement, lequel dispositif de centrage est formé parmi une pluralité de corps de guidage saillants (4) agencés sur la première moitié de forme (1) et des renfoncements de guidage (6) agencés sur la deuxième moitié de forme (5), au moyen desquels les deux moitiés de forme (1,5) sont centrées précisément dans la position fermée, chaque corps de guidage saillant (4) étant formé d'un boulon de forme cylindrique circulaire (8), sur lequel une cage de roulement (11) est placée avec les éléments de roulement (12) insérés dans des rangées (14, 15, 16), **caractérisé en ce que** la cage de roulement (11) est positionnée par un moyen de positionnement (23) dans l'état ouvert de telle sorte qu'une première série d'éléments de roulement (15) dirigée vers la première moitié de forme (1) repose sur la surface cylindrique circulaire (17) du boulon (8), et la deuxième série d'éléments de roulement (16) jouxte un bord d'encerclement (18) terminant la surface cylindrique circulaire (17) du boulon (8), et **en ce que** chaque renfoncement de guidage (6) est formé d'une gaine (9) avec une surface interne de forme cylindrique circulaire (10), qui, lors de la fermeture de l'outil de formage, peut être amené à passer sur les éléments de roulement (12) de la cage de roulement (11), de telle sorte que la gaine (9) passe pratiquement simultanément sur la première série d'éléments de roulement (15) et sur la deuxième série d'éléments de roulement (16), et que les forces de cadrage de précontrainte peuvent être absorbées simultanément par la première série d'éléments de roulement (15) et la deuxième série d'éléments de roulement (16).

2. Dispositif de centrage pour un outil de formage selon la revendication 1, **caractérisé en ce que** d'autres séries d'éléments de roulement (14) sont prévues avant la première série d'éléments de roulement (15) et/ou après la deuxième série d'éléments de roulement (16).

3. Dispositif de centrage pour un outil de formage selon la revendication 1 ou 2, **caractérisé en ce que** le boulon (8) comprend une zone adjacente au bord (18) de terminaison de la surface cylindrique circulaire (17), qui est formée par une autre surface cylindrique circulaire (19) présentant un diamètre plus petit que la surface cylindrique circulaire (17).

4. Dispositif de centrage pour un outil de formage selon la revendication 3, **caractérisé en ce que** le passage du bord (18) vers l'autre surface cylindrique circulaire (19) est pourvu d'une courbure (22), qui est adaptée à la courbure de l'élément de roulement (12).

5. Dispositif de centrage pour un outil de formage selon l'une des revendications 1 à 4, **caractérisé en ce que** la gaine (9) a un autre bord (20) dirigé contre la cage de roulement (11), terminant la surface intérieure cylindrique circulaire (10), à laquelle est reliée une zone d'entrée conique (21).

6. Dispositif de centrage pour un outil de formage selon l'une des revendications 1 à 5, **caractérisé en ce que** le boulon (8) est pourvu d'une tête (26), laquelle est introduite et fixée dans la première moitié de forme (1).

7. Dispositif de centrage pour un outil de formage selon la revendication 6, **caractérisé en ce que** les moyens de positionnement (23) sont constitués par au moins deux goupilles (24), qui sont montées de manière distribuée au niveau de la circonférence de la cage de roulement (11), sont orientées parallèlement à l'axe (25) du boulon (8), et qui sont déplaçables de façon guidée dans les trous (27) aménagés dans la tête (26) du boulon (8).

8. Dispositif de centrage pour un outil de formage selon la revendication 7, **caractérisé en ce que** les goupilles (24) sont pourvues de têtes (28) au niveau de l'extrémité opposée à la cage de roulement (11), qui forment des butées (30) avec l'aide des épaulements (29) agencés au niveau des trous (27), et lesquelles déterminent la position sortie de la cage de roulement (11).

9. Dispositif de centrage pour un outil de formage selon la revendication 8, **caractérisé en ce que** des ressorts de compression (31) sont engagés dans les trous (27), lesquels appuient les têtes (28) des goupilles (24) contre les épaulements (29).

10. Dispositif de centrage pour un outil de formage selon l'une des revendications 7 à 9, **caractérisé en ce que** le lien entre les goupilles (24) et la cage de roulement (11) s'effectue via un anneau de retenue (35), lequel est inséré dans une rainure circulaire (33) de la cage de roulement (11), et lequel pénètre dans des fentes (34) qui sont aménagées dans les goupilles (24).

11. Dispositif de centrage pour un outil de formage selon l'une des revendications 1 à 10, **caractérisé en ce que** les éléments de roulement (12) sont des rouleaux (13) ou des billes.
